# EUROPÄISCHE PATENTSCHRIFT

(11) **EP 1 195 534 B1**
(45) Veröffentlichungstag und Bekanntmachung des Hinweises auf die Patenterteilung: **02.03.2005**
(21) Anmeldenummer: 01123531.4
(22) Anmeldetag: 29.09.2001
(51) Int. Cl.: F16B 39/24

(54) **Lösbares Verbindungselement für ein Bauteil, mit einem Schraubteil und einem Sicherungsring**
Releasable fastening means with a screw element and a locking washer
Dispositif de fixation amovible comprenant un élément de vissage et une rondelle de blocage

(30) Priorität: 04.10.2000 DE 10048913
(43) Veröffentlichungstag der Anmeldung: 10.04.2002
(73) Patentinhaber: Kamax-Werke Rudolf Kellermann GmbH & Co. KG, 37520 Osterode am Harz (DE)
(72) Erfinder: Hartmann, Gunther, 36304 Alsfeld (DE); Sommer, Wolfgang, 35285 Gemünden/Wohra (DE); Wagner, Frank, 35418 Grossen Buseck (DE)
(74) Vertreter: Patentanwälte Rehberg + Hüppe

(56) Entgegenhaltungen:
- CH-A- 129 964
- GB-A- 910 258
- GB-A- 2 136 077
- US-A- 3 438 416
- US-A- 5 314 279

## Beschreibung

Die Erfindung betrifft ein lösbares Verbindungselement für ein Bauteil, mit einem Schraubteil, insbesondere einer Radschraube, und einem Sicherungsring, der an dem Schraubteil drehbar angeordnet ist, wobei das Schraubteil eine erste Schlüsselangriffsfläche, einen Gewindeabschnitt und eine Abstützfläche zur Übertragung einer Axialkraft auf den Sicherungsring aufweist, der Sicherungsring eine zweite Schlüsselangriffsfläche, eine Gegenabstützfläche und eine Anlagefläche für die Übertragung der Axialkraft auf das Bauteil besitzt und an der Abstützfläche und der Gegenabstützfläche zwischen Schraubteil und Sicherungsring korrespondierende Keilflächenverzahnungen mit in einer Drehrichtung unter Erhöhung der Axialkraft aufgleitenden, geneigt angeordneten Formflächen vorgesehen sind. Die Erfindung läßt sich allgemein bei der Verbindung von Bauteilen anwenden. Sie kann insbesondere auch in Verbindung mit einer Radschraube oder Radmutter eingesetzt werden, bei der also die Radschraube oder Radmutter das Schraubteil darstellt, denen dann ebenfalls jeweils ein Sicherungsring zugeordnet ist. Der Sicherungsring ist in aller Regel, insbesondere zur Erleichterung der Montage, unverlierbar mit dem Schraubteil verbunden. Die Verbindung ist so gestaltet, dass sich der Sicherungsring nicht nur relativ zum Schraubteil verdrehen kann, sondern dass im Rahmen eines vorgesehenen Bewegungsspiels ein radialer Versatz der Achsen gegeneinander möglich ist. Dies beschränkt sich freilich auf einen engen Bereich, wie er beispielsweise zum Ausgleich von Teilungsfehlern der Durchbrechung der Radschüssel und/oder der Nabe sinnvoll ist.

Ein lösbares Verbindungselement der eingangs beschriebenen Art mit einem Schraubteil und einem Sicherungsring ist aus der US-A-5,314,279 bekannt. Das Schraubteil ist als Mutter ausgebildet und besitzt somit keinen Schaft. Der Sicherungsring ist an dem Schraubteil drehbar angeordnet. Das Schraubteil weist eine erste Schlüsselangriffsfläche, einen Gewindeabschnitt und eine Abstützfläche zur Übertragung einer Axialkraft auf den Sicherungsring auf. Der Sicherungsring besitzt keinen Gewindeabschnitt, jedoch eine Gegenabstützfläche und eine Anlagefläche für die Übertragung der Axialkraft auf das Bauteil sowie eine zweite Schlüsselangriffsfläche. Das Schraubteil weist auf seiner dem Sicherungsring zugekehrten Abstützfläche eine erste, nur in Losdrehrichtung wirksame Keilflächenverzahnung auf. Der Sicherungsring besitzt auf der der Abstützfläche des Schraubteils zugekehrten Gegenabstützfläche eine korrespondierende Keilflächenverzahnung. Die in der einen Drehrichtung wirksame Keilflächenverzahnungen besitzen geneigt angeordnete Schrägflächen. Die Anordnung der Neigung dieser Schrägflächen ist größer als die Gewindesteigung. Beim Aufgleiten der Schrägflächen unter Verdrehung des Schraubteils gegenüber dem Sicherungsring ergibt sich eine Erhöhung der Axialkraft im Schraubteil und damit eine Sicherungswirkung. Die in dieser einen Drehrichtung wirksamen Schrägflächen der Keilflächenverzahnungen gehen unter Bildung von Schultern ineinander über. Diese Schultern besitzen eine vergleichsweise sehr viel größere Schräglage und wirken damit als Anschläge. Die Schultern sind also so ausgebildet, dass beim Anziehen des Verbindungselementes durch Einleitung eines manuell aufgebrachten Drehmomentes in das Schraubteil allein der Sicherungsring mitgenommen wird. Das bewußte Lösen des Verbindungselementes und des Sicherungsringes soll durch gleichzeitigen gleichförmigen Drehmomentangriff an dem Schraubteil und dem Sicherungsring erfolgen. Darüberhinaus sind die Reibungsverhältnisse an dem Schraubteil einerseits und dem Sicherungsring andererseits so aufeinander abgestimmt, dass bei einwirkenden Kräften, beispielsweise Vibrationen, eine Relativverdrehung des Schraubteils relativ zum Sicherungsring in Losdrehrichtung erfolgt. Dabei gleiten die Schrägflächen der in dieser einen Richtung wirksamen Keilflächenverzahnungen aufeinander auf und bewirken ein axiales Verspannen der Teile zueinander, welches ein fortgesetztes Losdrehen verhindert. Beim Anziehen des Schraubteils tritt über die Schultern zwischen Schraubteil und Sicherungsring Formschluss ein, der das Mitdrehen des Sicherungsrings in Anziehdrehrichtung bewirkt. Es wird auch ein dreiteiliges Verbindungselement beschrieben, bei dem zusätzlich zu dem Sicherungsring eine Unterlegscheibe vorgesehen ist. Zwischen dem Sicherungsring und der Unterlegscheibe ist eine mechanische Kupplung vorgesehen, die in beiden Drehrichtungen den Sicherungsring über die Unterlegscheibe festhält, um damit auf die Reibungsverhältnisse Einfluß zu nehmen und das Aufgleiten zwischen Schraubteil und Sicherungsring zu begünstigen.

Ein weiteres lösbares Verbindungselement ist in einer speziellen Anwendung als Radschraube aus der EP 0 836 016 A2 bekannt. Das Verbindungselement weist neben der Radschraube einen Stützring auf. Die Radschraube besitzt einen Kopf und einen Schaft, der mit einem Gewindeabschnitt versehen ist. Der Stützring erfüllt nur begrenzt eine Sicherungsfunktion; er dient in erster Linie der verbesserten Übertragung der Axialkraft der Radschraube. Der Kopf der Radschraube weist auf der dem Stützring zugekehrten Seite eine Abstützfläche zur Übertragung der Axialkraft auf den Stützring auf. Diese Abstützfläche ist als ebene Fläche ausgebildet. In Zuordnung hierzu besitzt der Stützring eine ebenfalls eben ausgebildete Gegenabstützfläche. Andererseits weist der Stützring auf der dem Fahrzeugrad zugekehrten Seite eine kegelstumpfförmige oder auch kugelförmig ausgebildete, also eine nicht-ebene Anlagefläche für die Übertragung der Axialkraft auf das Fahrzeugrad auf. Der Stützring ist über mindestens eine Verstemmung drehbar an der Radschraube gelagert und damit unverlierbar gehalten. In der Regel sind vier Verstemmungen über den Umfang verteilt angeordnet. Der Stützring soll über diese Verstemmungen mit der Radschraube so verbunden sein, dass dieser noch drehbar auf dem Schaft der Radschraube ist und somit wenig Reibung zwischen dem Stützring und dem Kopf der Schraube beim Befestigen des Rades entsteht. Der Stützring kann aus einer Leichtmetallegierung bestehen, während die Radschraube aus Stahl gefertigt ist. In Verbindung mit einem Fahrzeugrad aus Magnesium wird so eine Kontaktkorrosion zwischen dem Stützring und dem Fahrzeugrad vermieden. Es mag zwar sinnvoll sein, das Verbindungselement so auszubilden, dass beim Befestigen des Rades zwischen Stützring und Schraubenkopf möglichst wenig Reibung entsteht. Diese geringe Reibung ist aber hinsichtlich des selbsttätigen Lösens der Radschrauben nachteilig. Bei solchen Verbindungselementen besteht insbesondere bei Querbelastung die Gefahr des selbsttätigen Lösens. Dieser Gefahr kommt besondere Bedeutung zu, wenn man steigende Motorleistungen und Fahrzeuggewichte berücksichtigen will und in Betracht zieht, dass diese Verbindungselemente einer erheblichen Querbelastung beim Beschleunigen und Bremsen ausgesetzt sind. Zusätzlich besteht die Gefahr des Setzens solcher Verbindungselemente, insbesondere durch die am Fahrzeug unvermeidlich auftretenden Vibrationen und Schwingungen, wodurch die Axialkraft abgebaut wird. Dies führt dazu, dass sich solche Verbindungselemente bei entsprechender Querbelastung dann noch leichter von selbst lösen können.

Andererseits sind Schrauben bekannt, deren Abstützfläche unter dem Kopf in besonderer Weise ausgebildet ist, um die Gefahr des selbsttätigen Lösens bei Belastung zu vermindern. Dabei ist die Abstützfläche unter dem Kopf mit einer Keilflächenverzahnung versehen, die so ausgebildet und angeordnet ist, dass sich die Schraube vergleichsweise leicht anziehen läßt, indem entsprechend schwach geneigte Flächen der Keilflächenverzahnung über das Bauteil gleiten, während sich die Zähne nach dem Festziehen und unter Belastung in das Material des zu verschraubenden Bauteils eingraben und damit einen erhöhten Widerstand hervorrufen, der beim Lösen und beim Losdrehen der Schraube aufgebracht bzw. überwunden werden muß. Diese Keilflächenverzahnung zielt also darauf ab, beim Anziehen der Schraube ein Gleiten der Abstützfläche auf dem Bauteil zu ermöglichen, dagegen beim Lösen und Losdrehen möglichst Bedingungen zu schaffen, die ein erhöhtes Löse- und Losdrehmoment erfordern, um gleichsam einen Formschluß zu überwinden. Auch die Materialpaarung zwischen Schraube und Bauteil muß aufeinander abgestimmt werden. Es versteht sich, dass nur die Schraube eine Keilflächenverzahnung aufweist, während das Bauteil eine ebene bzw. glatte Anlagefläche besitzt. Damit wird durch die Erhöhung der Reibung zwischen der Abstützfläche des Kopfes der Schraube und der entsprechenden Gegenfläche am Bauteil in der Regel ein selbsttätiges Lösen wirkungsvoll verhindert. Andererseits ist ein bewußtes Losdrehen der Schraube unter Aufbringung eines entsprechend erhöhten Losdrehmomentes möglich. Die Mehrfachverwendung solcher Schrauben ist begrenzt.

Aus der DE-OS 24 13 760, der US 3,263,727 und der EP 0 131 556 sind Federringanordnungen aus zwei Sicherungsringen bekannt, die in Verbindung mit einer Schraube, eingesetzt werden. Die Federringanordnungen weisen zwei aufeinanderliegende Federringe auf, die identisch ausgebildet sein können und punktsymmetrisch aufeinander liegen. Diese beiden Federringe kommen zwischen der ebenen Abstützfläche am Kopf der Schraube und der ebenfalls ebenen Anlagefläche am Bauteil zur Anlage bzw. zur Wirkung. Die beiden Federringe weisen auf ihren nach außen gekehrten Oberflächen, also der Abstützfläche am Kopf zugekehrt einerseits und der Auflagefläche am Bauteil andererseits, eine die Reibung erhöhende Verzahnung, meist in Form radial angeordneter Rippen oder dgl. auf. Die beiden Federringe sind auf den einander zugekehrten Flächen mit Keilflächenverzahnungen versehen, die sich aus geneigten ebenen Flächenanteilen und gegebenenfalls weiteren senkrecht zur Achse der Federanordnung bzw. der Schraube angeordneten Flächenteilen zusammensetzen. Die geneigt angeordneten Flächenteile sind in Umfangsrichtung unterschiedlich geneigt angeordnet, um beim Anziehen der Schraube Formschluß zwischen den beiden Federringen bzw. Federscheiben herbeizuführen, jedoch in Losdrehrichtung die entsprechenden Keilflächen nach Art einer schiefen Ebene aufeinander gleiten zu lassen, um so eine Erhöhung der Axialkraft herbeizuführen. Beim Lösen oder Losdrehen der Verbindung muß diese erhöhte Axialkraft überwunden werden. Derartige Federringanordnungen sind teuer in der Herstellung und erhöhen die Anzahl der an einer Verschraubung einzusetzenden Teile. Zusätzlich müssen die beiden Federringe neben der Schraube gehandhabt und vor allen Dingen lagerichtig eingebaut werden. Die Federringe sind als verlierbare Zusatzteile vorgesehen. Die Verwendung von zusätzlichen Federringen in Verbindung mit lösbaren Schrauben erbringt den weiteren Nachteil, dass sich durch ihre Anwendung die Anzahl der Trenn- und Setzfugen zwischen den einzelnen Elementen der Verschraubung erhöht. Je größer die Anzahl dieser Setzfugen ist, je höher sind die dadurch verursachten Setzbeträge der Verschraubung, so dass ein gefährlicher Abbau der Axialkraft die Folge sein kann. Dies gilt insbesondere dann, wenn die bei der Verschraubung eingesetzten Elemente eine besondere Oberflächenausbildung aufweisen, sei es in Form einer korrosionshindernden Beschichtung, eines Überzuges oder dgl. und diese Elemente unter Betriebsbedingungen einer erhöhten Temperatur ausgesetzt sind. Bei lösbaren Verbindungselementen für die Befestigung eines Fahrzeugrades kommen solche zusätzlichen Federringanordnungen ohnehin nicht in Frage, weil die entsprechende Anlagefläche an der Radschüssel eine kegelige oder kugelige Form besitzt, also eine nicht-ebene Anlagefläche darstellt. Da solche Radschrauben oder Radmuttern auch häufig gelöst und wieder angezogen werden müssen, ergeben sich besondere Bedingungen, die der Anwendung einer Federscheibenanordnung entgegenstehen.

Der Erfindung liegt die Aufgabe zugrunde, ein lösbares Verbindungselement der eingangs beschriebenen Art bereitzustellen, welches eine Sicherungswirkung für das Schraubteil erbringt, gleichgültig, ob die bei Belastung in Losdrehrichtung wirkenden Kräfte über das Schraubteil und/oder den Sicherungsring einwirken. Das lösbare Verbindungselement soll aus möglichst wenig Einzelteilen bestehen, eine einfache und sichere Montage ermöglichen und schließlich die Bedingungen der Mehrfachverwendbarkeit erfüllen.

Erfindungsgemäß wird dies bei dem lösbaren Verbindungselement der eingangs beschriebenen Art dadurch erreicht, dass die Keilflächenverzahnungen auch in der anderen Drehrichtung unter Erhöhung der Axialkraft aufgleitende, geneigt angeordnete Formflächen aufweisen, sodass bei im Betrieb auftretender Krafteinwirkung auf das Schraubteil und/oder den Sicherungsring zwischen Schraubteil und Sicherungsring eine dem selbsttätigen Lösen entgegengerichtete Sicherungswirkung entsteht.

Die Erfindung geht von dem Gedanken aus, die bisher bekannten lösbaren Verbindungselemente in Form von Kopfschrauben oder Muttern, jeweils mit Stützring, zu verbessern, ohne die Anzahl der Teile zu vergrößern. Die Anwendung der Keilflächenverzahnungen erbringt eine Erhöhung der Axialkraft beim selbsttätigen Lösen, wirkt also dem Lösen bei erhöhten Beanspruchungen entgegen. Querkräfte, die bei entsprechender Belastung auf die Elemente des Verbindungselements einwirken, führen bei bekannten Verbindungselementen normalerweise zu einem selbsttätigen Lösen des Schraubteils. Durch das Aufgleiten der beiden Keilflächenverzahnungen aufeinander wird diese Lösebewegung beendet und einem weiteren Abfall der Vorspannkraft entgegengewirkt. Dabei findet nur eine sehr begrenzte Relativbewegung statt. Jeder Tendenz der Relativbewegung wird entgegengewirkt. Dies wird bei mehrfach auftretenden, auch unterschiedlich hohen Belastungen mehrfach so auftreten bzw. wirken. Dies gilt beim selbsttätigen Lösen für beide relativen Drehrichtungen. Im einen Fall führt die Belastung des Verbindungselements im Einsatz dazu, dass sich das Schraubteil gegenüber dem festsitzenden Sicherungsring in Losdrehrichtung verdrehen will; in diesem Fall wird das Schraubteil durch den festsitzenden Sicherungsring unter Erhöhung der Axialkraft gehalten und gesichert. Im anderen Fall führt die Belastung des Verbindungselements im Einsatz dazu, dass sich der Sicherungsring gegenüber dem festsitzenden Schraubteil in Losdrehrichtung verdrehen will; in diesem Fall wird der Sicherungsring durch das festsitzende Schraubteil unter Erhöhung der Axialkraft gehalten und gesichert. In beiden Fällen wirkt sich letztendlich die Sicherungswirkung auf das gesamte Verbindungselement aus Schraubteil und Sicherungsring aus. Durch diese bei entsprechender Belastung unvermeidliche Lösebewegung bei Querbeanspruchung findet also bei dem erfindungsgemäßen Verbindungselement in Verbindung mit den Keilflächenverzahnungen eine axiale und tangentiale Bewegung des Schraubteils gegenüber dem Stützring statt. Daraus resultiert vorteilhaft ein Ausgleich von Vorspannkraftverlusten. Dies gilt insbesondere dann, wenn die Vorspannkraft durch unvermeidliche Setzerscheinungen bereits verringert und damit der durch Reibschluß zwischen den verspannten Teilen übertragbare Anteil der Querkraft vermindert wurde. Ein ähnlicher Fall liegt vor, wenn die Verbindung z. B. durch unsachgemäße Montage oder Wartung nicht mit dem üblicherweise vorgeschriebenen Drehmoment angezogen und damit das für eine sichere Verbindung erforderliche Vorspannkraftniveau nicht erreicht wurde. Insofern stellt die Erfindung auch einen Beitrag zur Erhöhung der Sicherheit dar.

Die erste Schlüsselangriffsfläche ist üblicherweise an dem Schraubteil angeordnet, beispielsweise in Form eines Kopfes mit Sechskantquerschnitt innen oder außen. Auch der Sicherungsring weist eine zweite Schlüsselangriffsfläche auf, während Unterlegscheiben, Zahnscheiben und andere Sicherungselemente im Stand der Technik keine solche Schlüsselangriffsfläche aufweisen. Die Anordnung von zwei Schlüsselangriffsflächen in Zuordnung zueinander an zwei verschiedenen Teilen, nämlich einmal dem Schraubteil und zum anderen dem Sicherungsring, erbringt die sinnvolle Möglichkeit, beim bewußten Betätigen des Verbindungselementes das Schraubteil und den Sicherungsring gemeinsam zu handhaben, also gemeinsam anzuziehen oder loszudrehen, sodass bei diesem aktiven Kraftangriff bei der Montage oder Demontage die Keilflächenverzahnungen gegeneinander nicht belastet werden. Umgekehrt wird erfindungsgemäß im Einsatz des Verbindungselementes, also nach der Montage und vor der Demontage über die gesamte Zeit der einwirkenden Belastung die Wirkung der Keilflächenverzahnungen in beiden relativen Drehrichtungen genutzt, um eine Sicherungswirkung gegen selbsttätiges Lösen zu erbringen. Bei dieser Sicherungswirkung wird eine selbsttätig stattfindende Relativverdrehung zwischen Schraubteil und Sicherungsring dazu genutzt, um ein Aufgleiten der Teile mit Hilfe der beiden Keilflächenverzahnungen beim Auseinanderdrehen zu ermöglichen. Die dabei eintretende Erhöhung der Axialkraft des Verbindungselementes erbringt die Sicherungswirkung. Dies gilt für beide Drehrichtungen, gleichgültig, ob die in Losdrehrichtung einwirkende Kraft primär über das Schraubteil oder über den Sicherungsring auf das Verbindungselement einwirkt.

Durch die Aufteilung der ersten Keilflächenverzahnung auf das Schraubteil, also eine Kopfschraube, eine Radschraube bzw. Radmutter, und der zweiten Keilflächenverzahnung auf den Sicherungsring erhöht sich die Anzahl der verwendeten Teile nicht. Auch die Anzahl der Setzfugen bleibt im Vergleich zu bekannten Verbindungselementen gleich, sodass mit erhöhten Setzbeträgen nicht zu rechnen ist.

Darüberhinaus kann der Sicherungsring verliersicher an der Radschraube oder der Radmutter angeordnet sein. Dies kann durch mechanische Anschläge, aber auch durch einen Klebepunkt o. dgl. erreicht werden. So entsteht eine leicht handhabbare und immer komplett einsetzbare und eingesetzte Montageeinheit, die auch z. B. von Robotern, insbesondere bei der Erstmontage, gehandhabt werden kann.

Ein weiterer Vorteil des neuen Verbindungselementes besteht darin, dass durch den Einsatz des Sicherungsrings, der im Vergleich zu Sicherungsscheiben, Federscheiben u.ä. eine größere Bauhöhe aufweist, die auch durch die Anordnung der zweiten Schlüsselangriffsfläche bedingt ist, sich vorteilhaft eine erhöhte Klemmlänge ergibt. Das Verbindungselement ist damit in günstiger Weise elastisch gestaltet, was die Beibehaltung der Axialkraft, insbesondere beim Auftreten von Setzerscheinungen in der Verbindung, begünstigt. Dies kann z. B. auch durch die Wahl eines elastischeren Werkstoffs für den Sicherungsring im Vergleich zu dem Werkstoff des Schraubteils weiter unterstützt werden.

Die beiden Keilflächenverzahnungen sind so ausgebildet und angeordnet, dass bei im Betrieb auftretender Krafteinwirkung auf das Schraubteil und/oder den Sicherungsring in Losdrehrichtung des Verbindungselementes zwischen Schraubteil und Sicherungsring eine dem selbsttätigen Lösen entgegengerichtete Sicherungswirkung entsteht, wobei das Schraubteil und der Sicherungsring unter Erhöhung der Axialkraft auseinandergedreht werden, während beim gemeinsamen Anziehen und beim gemeinsamen Losdrehen die Keilflächenverzahnungen des Schraubteils und des Sicherungsrings Formschluß behalten. In der Regel tritt die Sicherungswirkung in gleichem Maße ein, gleichgültig, ob die das Losdrehen bewirkende Querkraft primär auf das Schraubteil oder den Sicherungsring einwirkt. Jede Keilflächenverzahnung besitzt Formflächen, die dann symmetrisch in beiden Richtungen angeordnet sind. Die aktive Betätigung des Verbindungselements, also beim Anziehen oder beim Lösen mit einem Werkzeug, geschieht immer so, dass das Schraubteil und der Sicherungsring gemeinsam ohne gegenseitigen Winkelversatz gedreht werden. Die beiden Keilflächenverzahnungen verbleiben also dabei unter Formschluß. Die Formflächen werden nicht durch Montagemomente belastet. Dies dient insbesondere der Mehrfachverwendbarkeit. Auch tritt bei der Montage und Demontage keine Relativbewegung zwischen Schraubteil und Sicherungsring und damit auch kein Verschleiß zwischen den Formflächen der beiden Keilflächenverzahnungen auf. Das Schraubteil und der Sicherungsring können aus Standardwerkstoffen unter Einsatz einer Standardwärmebehandlung preisgünstig hergestellt werden. Die Gestaltung und Anordnung der Formflächen der beiden Keilflächenverzahnungen wird frei von der Notwendigkeit, in Umfangsrichtung Formschluß zu erreichen oder zu behalten, weil die aktive Verdrehkraft immer an dem Schraubteil und dem Sicherungsring einwirkt. Dies bedeutet, dass die durch die Formflächen gebildeten Zähne der Keilflächenverzahnungen vergleichsweise wenig hoch gestaltet werden können.

Die Keilflächenverzahnungen weisen in den beiden Umfangsrichtungen an jedem Zahn mindestens zwei in den Umfangsrichtungen geneigt angeordnete Formflächen auf, wobei zur Ermöglichung der das Schraubteil und den Sicherungsring auseinanderdrehenden Gleitbewegung die in Losdrehrichtung miteinander in Kontakt kommenden Formflächen mit einem vergleichsweise kleinen, d.h. das Aufgleiten ermöglichenden, mittleren Tangentenwinkel in Umfangsrichtung angeordnet sind. Dieser Tangentenwinkel ist kleiner als der Winkel der Schultern im Stand der Technik. Es versteht sich, dass der Tangentenwinkel - über die maßgebliche Richtung betrachtet - konstant bleibt, wenn die Formflächen als nicht-ebene gewindeartig mit konstanter Steigung verlaufende Flächen ausgebildet sind.

Der wirksame Tangentenwinkel der in Losdrehrichtung des Schraubteils miteinander in Kontakt kommenden Formflächen der Keilflächenverzahnungen ist nur geringfügig größer als der Steigungswinkel des Gewindeabschnitts bemessen. Dies gilt zumindest für den ersten Bereich der Keilflächenverzahnungen in Losdrehrichtung des Schraubteils. So kann der wirksame Tangentenwinkel der in Losdrehrichtung des Schraubteils miteinander in Kontakt kommenden Formflächen der Keilflächenverzahnungen bis zu 20 % größer als der Steigungswinkel des Gewindeabschnitts bemessen sein. Besonders sinnvoll ist es, wenn der wirksame Tangentenwinkel etwa 3 bis 10 % größer als der Steigungswinkel des Gewindeabschnitts bemessen ist.

Die in den beiden Umfangsrichtungen geneigt angeordneten Formflächen können symmetrisch ausgebildet und symmetrisch geneigt angeordnet sein. Die Symmetrie besteht zu einer Ebene durch die Achse des Verbindungselements. Diese Ausführungsform ist sinnvoll, wenn erkennbar ist, dass die das selbsttätige Lösen bewirkenden Querkräfte bzw. Momente in gleichem Maße an dem Schraubteil oder dem Sicherungsring angreifen können.

Die in den beiden Umfangsrichtungen geneigt angeordneten Formflächen können aber auch asymmetrisch ausgebildet und/oder asymmetrisch geneigt angeordnet sein. Diese Ausführungsform ist sinnvoll, wenn erkennbar ist, dass die das selbsttätige Lösen bewirkenden Querkräfte bzw. Momente in unterschiedlichem Maße an dem Schraubteil im Vergleich zu dem Sicherungsring angreifen können. Der wirksame Tangentenwinkel der in Losdrehrichtung des Sicherungsrings miteinander in Kontakt kommenden Formflächen der Keilflächenverzahnungen kann kleiner als der Steigungswinkel des Gewindeabschnitts bemessen sein.

Die Keilflächenverzahnungen müssen sich auch nicht über den gesamten Bereich der Flächen an dem Schraubteil und dem Sicherungsring erstrecken, sondern können auch nur Bereiche dieser Flächen einnehmen. Auch radial ausgerichtete ebene Flächenbestandteile können durchaus vorgesehen sein. Wichtig ist, dass die Keilflächenverzahnungen abhängig von der jeweiligen Drehrichtung gleiche oder unterschiedliche Eigenschaften aufweisen. Formschluß ist nicht erforderlich. In Anzugsdrehrichtung des Schraubteils sowie entgegen der Anzugsrichtung, also in Losdrehrichtung, wird der Effekt der schiefen Ebene genutzt, um dem Abfall der Axialkraft entgegenzuwirken.

Weiterhin ist es bedeutsam, dass die zur Erreichung der Gleitbewegung in Losdrehrichtung miteinander in Kontakt kommenden Formflächen als nicht-ebene, gewindeartig verlaufende Formflächen ausgebildet sind. Dann erfolgt eine vollflächige Abstützung der sich durch das gegenseitige Verdrehen erhöhenden Axialkraft des Schraubteils an dem Sicherungsring, etwa im Gegensatz zu einer punkt- oder linienförmigen Abstützung der in Kontakt kommenden Formflächen aufeinander.

Die beiden Keilflächenverzahnungen und/oder die Anlagefläche des Sicherungsrings für die Übertragung der Axialkraft auf das Bauteil sollten so ausgebildet und angeordnet sein, dass das über die Keilflächenverzahnungen übertragbare Drehmoment kleiner als das zwischen Sicherungsring und Bauteil übertragbare Drehmoment ist. Dies kann auf mehrfache Weise erreicht werden. Beispielsweise kann die Keilflächenverzahnung durch ein aufgebrachtes Schmiermittel eine niedrige Reibung aufweisen. Es ist aber auch möglich, dass die Anlagefläche des Sicherungsrings Mittel zur Erzeugung einer erhöhten Reibung aufweist. Diese Mittel können aus Rippen, leistenartigen Vorsprüngen, aus einer die Reibung erhöhenden Beschichtung, und/oder einer gestrahlten Oberfläche versehen ist. Diese Bedingung wird leichter erreicht, wenn die Anlagefläche des Sicherungsrings an dem Bauteil einen größeren Reibradius als die Keilflächenverzahnungen aufweist.

Der Sicherungsring kann an dem Schraubteil unverlierbar, aber beweglich, angeordnet sein. Die Beweglichkeit bezieht sich auf einen möglichen Versatz zwischen dem Schraubteil und dem Sicherungsring, um eine Anpassung an Teilungsfehler zu ermöglichen. Zum Erreichen der Unverlierbarkeit gibt es verschiedene Möglichkeiten. Eine einfache Möglichkeit besteht darin, den Sicherungsring auf den Schaft des Schraubteils aufzuschieben und erst anschließend das Gewinde am Gewindeabschnitt aufzurollen. Der Außendurchmesser des Gewindes wird dabei größer als der Innendurchmesser der Bohrung am Sicherungsring. Auch das nachträgliche Aufrollen einer Sicherungsrille, eines Wulstes o. dgl. auf den Schaft des Schraubteils ist möglich. Auch Verstemmungen an dem Sicherungsring sind möglich. Das Schraubteil und der Sicherungsring können auch insbesondere durch einen Klebepunkt miteinander winkelgetreu verbunden sein. Die Wirksamkeit des Klebepunkts beschränkt sich im wesentlichen auf den Ersteinsatz des Verbindungselements. Er stellt gleichzeitig sicher, dass die winkelgetreue Relativlage bis zum gemeinsamen Ergreifen der beiden Schlüsselangriffsflächen durch ein Werkzeug beibehalten wird. Andererseits soll der Klebepunkt das übertragbare Drehmoment zwischen den Keilflächenverzahnungen nicht nennenswert erhöhen.

Die erste Schlüsselangriffsfläche an dem Schraubteil und die zweite Schlüsselangriffsfläche an dem Sicherungsring können vorteilhaft zueinander fluchtend ausgebildet und angeordnet sein, sodass sie mit einem Schlüssel gemeinsam handhabbar sind. In dieser Relativlage greifen die beiden Keilflächenverzahnungen maximal ineinander ein.

Die Erfindung wird anhand verschiedener Ausführungsbeispiele weiter erläutert und beschrieben. Es zeigen:
- Fig. 1: eine Ansicht des Verbindungselementes aus Schraubteil und Sicherungsring in einer ersten Ausführungsform,
- Fig. 2: eine Ansicht des Schraubteils gemäß Fig. 1,
- Fig. 3: eine Ansicht des Sicherungsrings gemäß Fig. 1,
- Fig. 4: eine Draufsicht auf den Sicherungsring gemäß Fig. 3 von oben,
- Fig. 5: eine Ansicht des Verbindungselementes aus Schraubteil und Sicherungsring in einer zweiten Ausführungsform,
- Fig. 6: eine Ansicht des Sicherungsrings in einer dritten Ausführungsform,
- Fig. 7: eine Ansicht des Schraubteils mit asymmetrischer Keilflächenverzahnung,
- Fig. 8: eine Ansicht des Sicherungsrings mit asymmetrischer Keilflächenverzahnung,
- Fig. 9: eine Draufsicht auf den Sicherungsring gemäß Fig. 8 von oben,
- Fig. 10: eine Ansicht einer weiteren Ausführungsform des Schraubteils,
- Fig. 11: eine Ansicht einer weiteren Ausführungsform des Sicherungsrings,
- Fig. 12: eine Draufsicht auf den Sicherungsring gemäß Fig. 11 von oben,
- Fig. 13: eine Ansicht des Verbindungselementes aus einem Schraubteil und einem als Hohlkörper ausgebildeten Sicherungsring,
- Fig. 14: eine Ansicht und einen Halbschnitt eines Verbindungselementes aus einem als Radmutter ausgebildeten Schraubteil und einem Sicherungsring,
- Fig. 15: eine Ansicht des Verbindungselementes aus Schraubteil und Sicherungsring in einer weiteren Ausführungsform,
- Fig. 16: eine Ansicht des Schraubteils gemäß Fig. 15 und
- Fig. 17: eine Ansicht des Sicherungsrings gemäß Fig. 15.

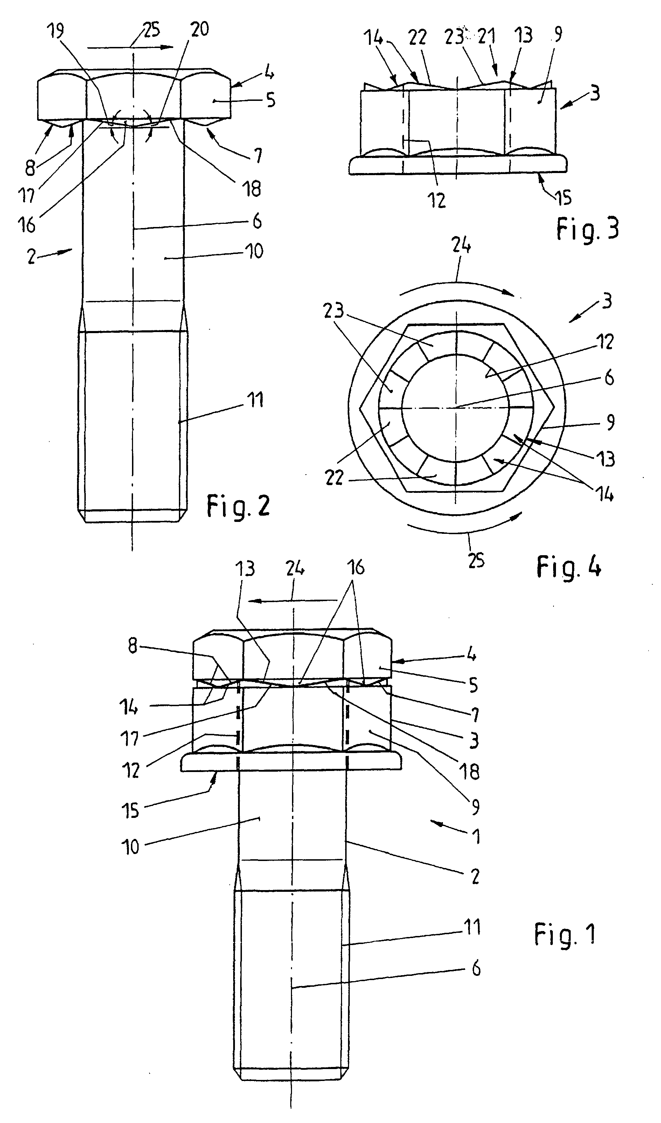

In Fig. 1 ist eine erste Ausführungsform eines Verbindungselementes 1 dargestellt, wie es zur Befestigung von Bauteilen eingesetzt wird. Das Verbindungselement 1 besteht aus zwei Teilen, nämlich einem Schraubteil 2 und einem Sicherungsring 3. Das Schraubteil 2 ist hier in Form einer Schraube verwirklicht. Das Schraubteil 2 weist einen Kopf 4 auf, der eine erste Schlüsselangriffsfläche 5 zum Angriff eines Schraubenschlüssels oder eines ähnlichen Verdrehwerkzeuges besitzt. Das Schraubteil 2 und der Sicherungsring 3 weisen eine gemeinsame Achse 6 auf bzw werden mit gemeinsamer Achse 6 eingesetzt. Der Kopf 4 des Schraubteils 2 geht auf der Unterseite in eine Abstützfläche 7 über. Die Abstützfläche 7 besteht aus mehreren Flächenbestandteilen, die insgesamt eine erste Keilflächenverzahnung 8 bilden. Die Abstützfläche 7 insgesamt ist senkrecht zu der Achse 6 des Verbindungselementes 1 ausgerichtet angeordnet. An die Abstützfläche 7 bzw. die erste Keilflächenverzahnung 8 schließt sich ein Schaft 10 an, der endseitig beginnend mit einem Gewindeabschnitt 11 versehen ist, mit dem das Verbindungselement 1 aus Schraubteil 2 und Sicherungsring 3 in ein entsprechendes Gegengewinde am Bauteil eingeschraubt wird.

Das zweite Teil des Verbindungselementes 1 ist der Sicherungsring 3. Der Sicherungsring 3 ist ein ringförmiger Körper. Er besitzt eine zweite Schlüsselangriffsfläche 9. Die Schlüsselangriffsflächen 5 und 9 können in jeder nur denkbaren Weise ausgebildet sein, also z.B. als Sechskant, Vierkant, mit unrundem Querschnitt und dgl.. Sinnvoll im Sinne einer einfachen Betätigung ist es jedoch, wenn die beiden Schlüsselangriffsflächen 5 und 9 übereinstimmend ausgebildet und fluchtend zueinander vorgesehen sind. Der Sicherungsring 3 besitzt weiterhin fluchtend zur Achse 6 eine Bohrung 12 (Fig. 1, 3 und 4). Wenn die Bohrung 12 einen größeren Durchmesser als der Außendurchmesser des Gewindeabschnitts 11 aufweist, können die Teile unmittelbar vor der Montage zusammengeführt werden. Wenn die Bohrung 12 einen kleineren Durchmesser als der Außendurchmesser des Gewindeabschnitts 11 und einen größeren Durchmesser als der Durchmesser des Schaftes 10 aufweist, können die Teile während der Herstellung und vor dem Aufrollen des Gewindes des Gewindeabschnitts 11 zusammengeführt werden. Es entsteht dann eine Montageeinheit, bei der der Sicherungsring 3 unverlierbar an dem Schraubteil 2 gehalten ist.

Auf seiner Oberseite, also dem Kopf 4 des Schraubteils 2 zugekehrt, ist an dem Sicherungsring 3 eine Gegenabstützfläche 13 vorgesehen, die mit der Abstützfläche 7 des Schraubteils 2 korrespondiert. An der Gegenabstützfläche 13 ist eine zweite Keilflächenverzahnung 14 ausgebildet, die auf die erste Keilflächenverzahnung 8 des Schraubteils 2 abgestimmt ist.

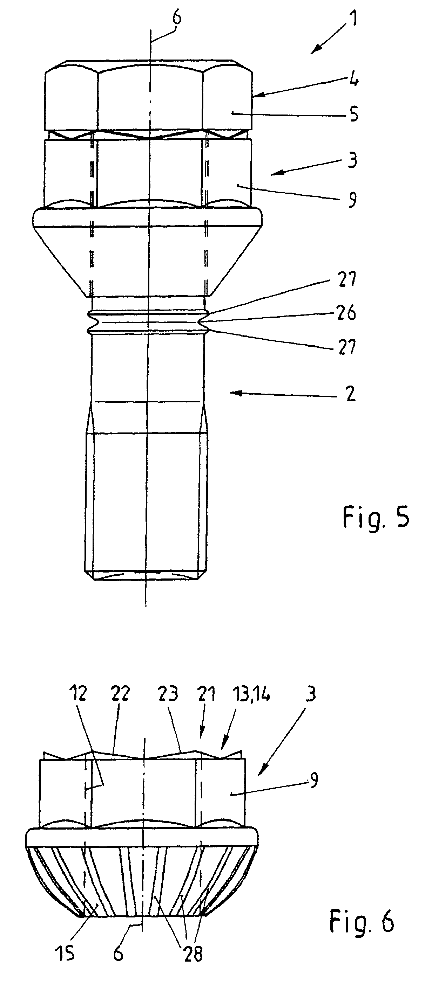

Der Sicherungsring 3 weist auf seiner Unterseite, also in montiertem Zustand dem Gewindeabschnitt 11 des Schraubteils 2 zugekehrt, eine Anlagefläche 15 auf, die als ebene Fläche (Fig. 1 und 3) ausgebildet ist, aber auch ballige bzw. kugelige oder kegelförmige Gestalt besitzen kann (Fig. 5, 6 und 11).

Aus Fig. 1 ist bereits erkennbar, daß die beiden einander zugeordneten Keilflächenverzahnungen 8 und 14 beispielsweise symmetrisch zueinander ausgebildet und angeordnet sind. Die beiden Keilflächenverzahnungen 8 und 14 greifen ineinander in einer solchen relativen Winkellage zwischen Schraubteil 2 und Sicherungsring 3 maximal formschlüssig ein, bei der die Schlüsselangriffsflächen 5 und 9 in Richtung der Achse 6 miteinander fluchten. Beim Anziehen und beim Losdrehen des Verbindungselements 1 werden das Schraubteil 2 und der Sicherungsring 3 gemeinsam, insbesondere unter Einsatz eines einzigen entsprechend breit ausgebildeten Schraubenschlüssels gedreht. Während eines Befestigungsvorgangs eines Bauteils erfolgt also eine Drehung des Schraubteils 2 (mit Rechtsgewinde) und des Sicherungsrings 3 im normalen Rechtsdrehsinn in Drehrichtung 24 gemäß der Pfeilangabe in den Fig. 1 und 4. Umgekehrt erfolgt beim Losdrehen in Drehrichtung 25 (Fig. 2 und 4) gemäß der Pfeilangabe ein gemeinsames Verdrehen von Schraubteil 2 und Sicherungsring 3. Die Keilflächenverzahnungen 8 und 14 führen dabei keine Relativbewegung zueinander aus. Es entsteht beim bewußten Anziehen oder Losdrehen kein Verschleiß und auch keine plastische Verformung. Dies begünstigt die Wiederverwendbarkeit des Verbindungselements 1. Im Einsatz des montierten Verbindungselements 1 können Querkräfte an dem Schraubteil 2 oder dem Sicherungsring 3 angreifen, die sich in einem relativen Verdrehen von Schraubteil 2 und Sicherungsring 3 äußern. Wenn die Querkräfte an dem Schraubteil 2 angreifen, verdreht sich dieses gegenüber dem festsitzenden Sicherungsring 3 in Drehrichtung 25, die zugleich die Losdrehrichtung des Verbindungselements darstellt. Wenn die Querkräfte an dem Sicherungsring 3 angreifen, verdreht sich dieser gegenüber dem festsitzenden Schraubteil 2 in Drehrichtung 25 oder in Drehrichtung 24, was einer Relativverdrehung des Schraubteils 2 gegenüber dem Sicherungsring 3 in Drehrichtung 24 bzw. 25 entspricht. In beiden Fällen erfolgt ein Aufgleiten der Keilflächenverzahnungen 8 und 14 aufeinander unter axialer Entfernung des Kopfes 4 von dem Sicherungsring 3 in Richtung der Achse 6.

Das in Fig. 1 dargestellte Verbindungselement 1 kann lose zusammengesteckt sein, wenn der Durchmesser der Bohrung 12 größer ist als der Außendurchmesser des Gewindeabschnitts 11. Der Stützring 3 ist damit abnehmbar an dem Schraubteil 2 vorgesehen. Der Sicherungsring 3 kann aber auch unverlierbar an dem Schraubteil 2 gehalten sein. In beiden Fällen muß der Sicherungsring 3 drehbar gegenüber dem Schraubteil 2 angeordnet sein.

Anhand der Fig. 1 und 2 wird insbesondere die erste Keilflächenverzahnung 8 an dem Schraubteil 2 weiter verdeutlicht und beschrieben. Die Anlagefläche 7 bzw. die erste Keilflächenverzahnung 8 weist in dem Ausführungsbeispiel sechs Zähne 16 auf, die symmetrisch ausgebildet und angeordnet sind. Dabei ist es gleichgültig, ob der Gewindeabschnitt 11 ein Rechts- oder ein Linksgewinde aufweist. Der Unterschied liegt nur darin, daß die jeweils andere der beiden Drehrichtungen 24 bzw. 25 die Losdrehrichtung ist. Jeder Zahn 16 wiederum ist aus zwei Formflächen 17 und 18 zusammengesetzt. Die Formflächen 17 erstrecken sich in radialer Richtung zu der Achse 6. Die Formflächen 17 und 18 sind als gewindeartig verlaufende nicht-ebene Flächen ausgebildet und schneiden einander in Kanten, deren Verlängerungen die Achse 6 schneiden. Die geneigt angeordneten Formflächen 17 und 18 sind mit übereinstimmenden Tangentenwinkeln 19 und 20 (Fig. 2) angeordnet. Die Tangentenwinkel 19 und 20 können auch unterschiedlich bemessen sein. Zumindest der Tangentenwinkel 20 sollte geringfügig größer als der Steigungswinkel des Gewindes des Gewindeabschnitts 11 bemessen sein. In beiden relativen Drehrichtungen 24 und 25 wird hier das zum Aufgleiten in Losdrehrichtung benötigte Prinzip der schiefen Ebene verwirklicht. Die Formflächen 17 und 18 sind hier als nicht-ebene gewindeartig verlaufende Flächen ausgebildet, die sich etwa vom Rand des Kopfes 4 radial nach innen fast bis zum Schaft 10 des Schraubteils 2 erstrecken. Infolge der Ausbildung der Formflächen 17 und 18 als nicht-ebene Flächen mit konstanter Steigung gibt es über den relativen Verdrehweg nur jeweils einen wirksamen Tangentenwinkel 19 bzw. 20 unabhängig von der jeweiligen Verdrehposition zwischen Schraubteil 2 und Sicherungsring 3. Der Tangentenwinkel 20 ist größer als der Steigungswinkel des Gewindes des Gewindeabschnitts 11 des Schraubteils 2.

Die Fig. 3 und 4 zeigen in Einzeldarstellung den Sicherungsring 3 mit seiner komplementären Ausbildung der Gegenabstützfläche 13 bzw. der zweiten Keilflächenverzahnung 14. Auch die Keilflächenverzahnung 14 weist sechs Zähne 21 auf, die über den Umfang in Zuordnung zu der Schlüsselangriffsfläche 9 verteilt angeordnet sind. Jeder Zahn 21 ist aus zwei Formflächen 22 und 23 zusammengesetzt. Die Formflächen 22 des Sicherungsrings 3 sind korrespondierend zu den Formflächen 17 des Schraubteils 2 ausgebildet und angeordnet. Die Formflächen 23 des Sicherungsrings 3 sind korrespondierend zu den Formflächen 18 des Schraubteils 2 ausgebildet und angeordnet. Die Formflächen 22 und 23 sind somit auch in übereinstimmenden Tangentenwinkeln 19 und 20 vorgesehen und erstrecken sich radial sowie senkrecht zur Achse 6, so daß auch hier die Verlängerung der Formflächen 22 und 23 die gemeinsame Achse 6 des Verbindungselementes 1 schneiden. Auch die Formflächen 22 und 23 sind in diesem ersten Ausführungsbeispiel als nicht-ebene gewindeartig mit konstanter Steigung versehene Flächen ausgebildet, so daß konstante Tangentenwinkel 19 und 20 Anwendung finden, gleichgültig in welchem relativ zueinander verdrehten Zustand sich das Schraubteil 2 gegenüber dem Sicherungsring 3 befindet.

Zum Befestigen eines Bauteils werden in der Regel mehrere Verbindungselemente 1 benötigt. Auf ein Schraubteil 2 wird ein Sicherungsring 3 in der aus den Fig. 1 erkennbaren Relativlage aufgesteckt. Es gibt sechs solche Relativlagen, in denen maximaler Formschluß besteht und gleichzeitig die Schlüsselangriffsflächen 5 und 9 miteinander fluchten. Das Schraubteil 2 wird zusammen mit dem Sicherungsring 3 sodann mit dem Gewindeabschnitt 11 durch die entsprechende Durchbrechung in dem Bauteil hindurch in ein Gegengewinde eingeschraubt. Dabei werden Schraubteil 2 und Sicherungsring 3 als gemeinsame Einheit gedreht bzw. eingeschraubt. Zwischen den Keilflächenverzahnungen 8 und 14 besteht maximaler Formschluß, d.h. der Sicherungsring 3 und der Kopf 4 des Schraubteils 2 befinden sich in axialer Richtung auf der kleinst möglichen Entfernung. Die Schlüsselangriffsflächen 5 und 9 können miteinander fluchten. Die Zähne 16 und 21 werden beim Einschrauben durch das Einschrabmoment nicht belastet.

Das fertig montierte und eingeschraubte Verbindungselement 1 unterliegt dann im Einsatz einer Querbeanspruchung. Die auftretenden Querkräfte können an dem Schraubteil 2 oder dem Sicherungsring 3 angreifen. Wenn sie an dem Schraubteil 2 angreifen, neigt dieses dazu, sich gegenüber dem festsitzenden Sicherungsring 3 in Drehrichtung 25 zu verdrehen. Dies zielt darauf ab, daß ein geringfügiges selbsttätiges Lösen des Schraubteils 2 infolge hoher Querkraftbeanspruchung dazu führt, daß mit Hilfe der Formflächen 18 und 23 ein Aufgleitvorgang stattfindet, sich also das Schraubteil 2 relativ zu dem durch Reibschluß feststehenden Sicherungsring 3 in Losdrehrichtung verdreht und dadurch das Schraubteil 2 und der Sicherungsring 3 axial auseinander gedrückt werden, sodaß durch eine Erhöhung der Vorspannkraft ein weiteres selbsttätiges Lösen sicher vermieden wird. Dies ist ein erheblicher Sicherheitseffekt.

Wenn in anderen Falle die Querkräfte an dem Sicherungsring 3 angreifen, neigt dieser dazu, sich gegenüber dem festsitzenden Schraubteil 2 in Drehrichtung 25 zu verdrehen. Dies ist gleichbedeutend mit einer Relativverdrehung des Schraubteils 2 gegenüber dem Sicherungsring 3 in Drehrichtung 24. Auch dies zielt darauf ab, daß ein geringfügiges selbsttätiges Lösen des Sicherungsrings 3 infolge hoher Querkraftbeanspruchung dazu führt, daß mit Hilfe der Formflächen 17 und 22 ein Aufgleitvorgang stattfindet, sich also der Sicherungsring 3 relativ zu dem durch Reibschluß feststehenden Schraubteil 2 in Losdrehrichtung verdreht und dadurch das Schraubteil 2 und der Sicherungsring 3 axial auseinander gedrückt werden, sodaß durch eine Erhöhung der Vorspannkraft ein weiteres selbsttätiges Lösen sicher vermieden wird. Dies ist ein erheblicher Sicherheitseffekt.

Freilich ist es erforderlich, beim bewußten Losdrehen des Verbindungselementes 1 das Schraubteil 2 und den Sicherungsring als eine Einheit in Drehrichtung 25 zu verdrehen.

Die in Fig. 5 dargestellte zweite Ausführungsform des Verbindungselementes 1 stimmt in weiten Bereichen mit der Ausführungsform gemäß den Fig. 1 - 4 überein, weshalb hierauf verwiesen werden kann. Die Anlagefläche 15 des Sicherungsrings 3 ist hier kegelförmig gestaltet. Das Verbindungselement 1 mit seinem Schraubteil 2 und seinem Sicherungsring 3 ist hier als Radschraube ausgebildet und dient der Befestigung einer Radschüssel an der Nabe einer Fahrzeugachse. Auch hier sind das Schraubteil 2 und der Scherungsring 3 zu einer unverlierbaren Montageeinheit zusammengefügt. Im Bereich des Schaftes 10 des Schraubteils 2 ist nach dem Aufstecken des Stützrings 3 eine Rille 26 eingerollt, durch die zwei Materialwulste 27 entstehen, in denen das Material des Schaftes 10 radial nach außen verdrängt wird. Der Durchmesser im Bereich der Materialwulste 27 ist dann größer als der Durchmesser der Bohrung 12 des Sicherungsrings 3. Damit ist der Sicherungsring 3 verliergesichert an dem Schraubteil 2 festgelegt. Der Sicherungsring 3 kann aber nach wie vor gedreht werden, sich bei der Montage an die Gegebenheiten anpassen und im Losdrehfall gemeinsam mit dem Schraubteil 2 gedreht werden. Es versteht sich, daß für die verliergesicherte Anordnung des Sicherungsrings 3 an dem Schraubteil 2 auch andere Möglichkeiten zur Verfügung stehen.

Fig. 6 zeigt die Unterseite eines Sicherungsrings 3 in einer weiteren Ausführungsform. Die dort gebildete Anlagefläche 15 ist ballig ausgebildet und weist Rippen 28 auf, die radial angeordnet sind und aus der ballig ausgebildeten Anlagefläche 15 hervorragen. Diese Rippen 28 haben die Aufgabe, das Reibmoment zwischen der Anlagefläche 15 und der entsprechenden Gegenanlagefläche an der Radschüssel bzw. dem Bauteil zu erhöhen, damit dieses Reibmoment größer ist als das Reibmoment zwischen den Keilflächenverzahnungen 8 und 14 in Losdrehrichtung. Eine die Reibung erhöhende Maßnahme kann auch in anderer Weise getroffen sein, beispielsweise durch eine Beschichtung, durch die Gestaltung der Rauhigkeit der Oberfläche der Anlagefläche 15 im Mikrobereich usw..

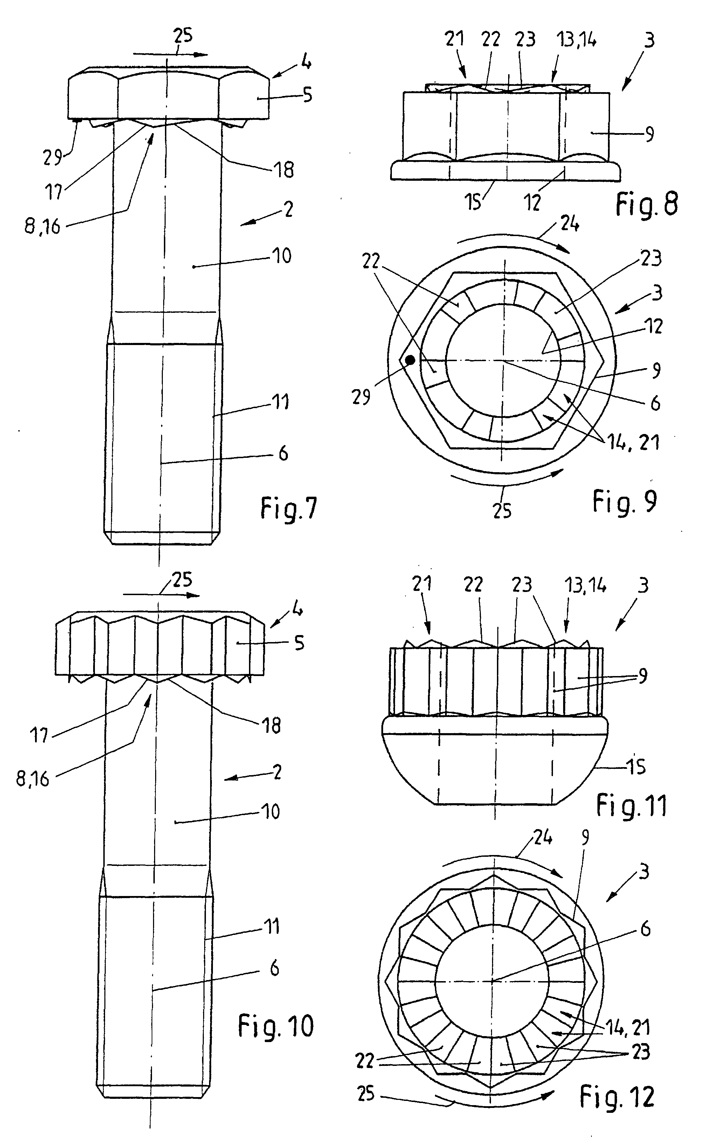

In Fig. 7 ist eine weitere Ausführungsform des Schraubteils 2 dargestellt, zu dem ein Sicherungsring 3 gehört, wie er in den Fig. 8 und 9 dargestellt ist. Die Darstellung der Fig. 7 bis 9 entspricht im wesentlichen derjenigen der Fig. 2 bis 4, so daß auf die diesbezügliche Beschreibung verwiesen werden kann. Während die Formflächen 17 und 18 der Zähne 16 des Schraubteils 2 gemäß Fig. 2 symmetrisch ausgebildet waren, sind nunmehr die Formflächen 17 und 18 der Zähne 16, die die Keilflächenverzahnung 8 bilden, in unterschiedlicher Neigung, also unterschiedlichen Tangentenwinkeln, angeordnet. Die Formflächen 18 erstrecken sich mit geringerer Neigung in Umfangsrichtung als die Formflächen 17. Die Formflächen 18 besitzen deshalb auch eine größere Erstreckung, da beide Formflächen 17 und 18 entlang gemeinsamer Kanten ineinander übergehen. Den Formflächen 17 der Zähne 16 sind am Sicherungsring 3 Formflächen 22 an den Zähnen 21 zugeordnet. Entsprechend sind die Formflächen 23 komplementär zu den Formflächen 18. Auch dabei ist die Anordnung so getroffen, daß die Keilflächenverzahnungen 8 und 14 in sechs unterschiedlichen Winkellagen zusammenpassen, wobei in jeder dieser Winkellagen die Schlüsselangriffsflächen 5 und 9 miteinander fluchten. Wenn die Schlüsselangriffsflächen 5 und 9 anstatt der dargestellten sechseckigen Ausbildung die Gestalt eines Vierkantes haben, sollten auch die Formflächen jeweils in vier Paaren oder einem ganzzahligen Teil davon vorgesehen sein, um die gewünschten Relativlagen für die gemeinsame Betätigung des Verbindungselementes 1 aus Schraubteil 2 und Sicherungsring 3 beim Anziehen und beim Losdrehen sicherzustellen. Schraubteil 2 gemäß Fig. 7 und Sicherungsring 3 gemäß Fig. 9 können als vormontierte Einheit über einen Klebepunkt 29 miteinander verbunden sein, so daß damit eine der sechs möglichen Winkellagen bevorzugt ist und bei der Anwendung eine entsprechende Ausrichtung unnötig wird. Der Klebepunkt 29 kann auch dazu dienen, den Sicherungsring 3 verliergesichert an dem Schraubteil 2 zu befestigen. Die Klebekraft des Klebepunktes 29 muß gering bemessen sein, jedenfalls so gering, daß sie sich bei Querbeanspruchungen löst, so daß die angesprochene geringfügige Relativverdrehung zwischen Schraubteil 2 und Sicherungsring 3 und der beschriebene Aufgleitvorgang stattfinden können und von dem Klebepunkt 29 nicht behindert werden. Anstatt der Verwendung eines Klebepunktes 29 können auch nicht dargestellte Markierungen am Schraubteil 2 und am Sicherungsring 3 eingesetzt werden.

Je nach Anwendungsfall kann es sinnvoll sein, unterschiedliche Neigungen der Formflächen 17 und 18 einerseits sowie der korrespondierenden Formflächen 22 und 23 einzusetzen. Die Neigung der Formflächen 18 und 23 ist bestimmend für den Aufgleitvorgang, bei dem die Querkräfte an dem Schraubteil 2 angreifen und sich damit das Schraubteil 2 in Drehrichtung 25 gegenüber dem festsitzenden Sicherungsring 3 zu verdrehen droht. Für eine Nachspannwirkung ist es erforderlich, daß der Neigungswinkel der Formflächen 18 und 23 größer, aber nicht allzu viel größer als der Steigungswinkel des Gewindes im Gewindeabschnitt 11 ausgebildet ist. Da für die Tangentenwinkel der Formflächen 17 und 23 die beschriebene Grenze nicht zutrifft, kann es sinnvoll sein, die Formflächen 17 und 22 mit vergleichsweise kleinerem Tangentenwinkel vorzusehen als die Formflächen 18 und 23. Die insoweit umgekehrte Ausbildung, als in den Fig. 7 bis 9 dargestellt, erscheint deshalb besonders sinnvoll.

In den Fig. 10 bis 12 ist ein weiteres Ausführungsbeispiel dargestellt. Auch diese Darstellung entspricht der Darstellung der Fig. 2 bis 4, so daß auf die diesbezügliche Beschreibung verwiesen werden kann. Die Schlüsselangriffsflächen 5 und 9 sind hier als regelmäßiges Zwölfeck ausgebildet, so daß es zwölf verschiedene Relativlagen gibt, in denen die Keilflächenverzahnungen 8 und 14 genau und ausgerichtet ineinandergreifen. Demzufolge ist auch die Anzahl der Zähne 16 und 21 und der zugehörigen Formflächen 17, 18 und 22, 23 verdoppelt. Die Anlagefläche 15 ist hier ballig ausgeführt, so daß erkennbar wird, daß dieses Verbindungselement als Radschraube besonders geeignet ist.

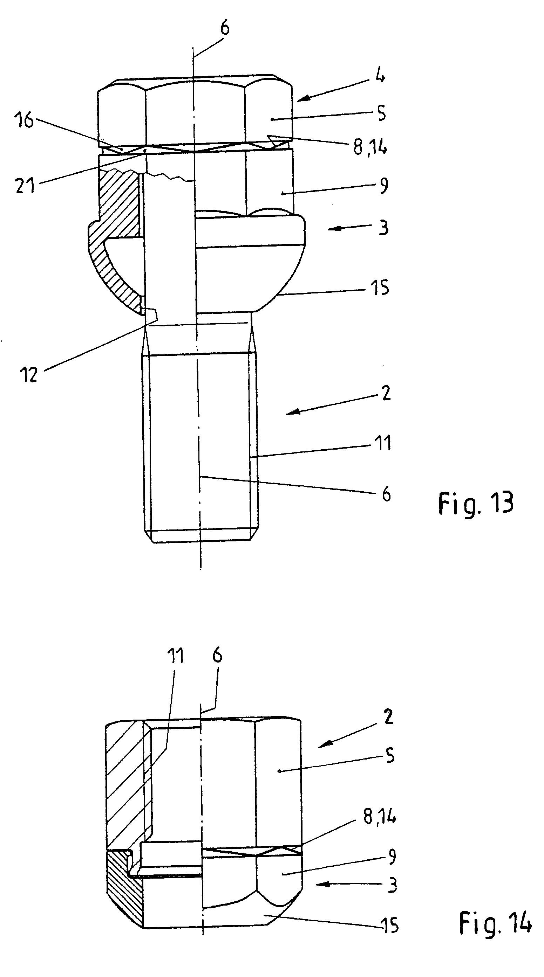

Fig. 13 zeigt ein Ausführungsbeispiel des Verbindungselementes 1 aus Schraubteil 2 und Sicherungsring 3 mit symmetrischer Ausbildung der Zähne 16, 21 und entsprechender symmetrischer Keilflächenverzahnungen 8 und 14. Der Sicherungsring 3 ist hier insbesondere in seinem unteren Teil als elastischer Hohlkörper ausgebildet. Er ist damit in Richtung der Achse 6 besonders elastisch gestaltet, um den Bewegungen noch besser Rechnung tragen zu können.

Fig. 14 zeigt ein Verbindungselement 1 in der Ausbildung als Radmutter. Das Schraubteil 2 ist hier in Form einer Mutter ausgebildet und besitzt die erste Schlüsselangriffsfläche 5 sowie in seinem Innern den Gewindeabschnitt 11. Der Sicherungsring 3 ist an dem Schraubteil 2 unverlierbar, jedoch drehbar gehalten. Die aufeinander abgestimmten Keilflächenverzahnungen 8, 14 sind hier wiederum symmetrisch ausgebildet. Der Sicherungsring 3 weist eine ballig ausgebildete Anlagefläche 15 auf. Damit wird verdeutlicht, daß die Erfindung auch auf die Kombination einer Mutter mit einem Sicherungsring 3 anwendbar ist.

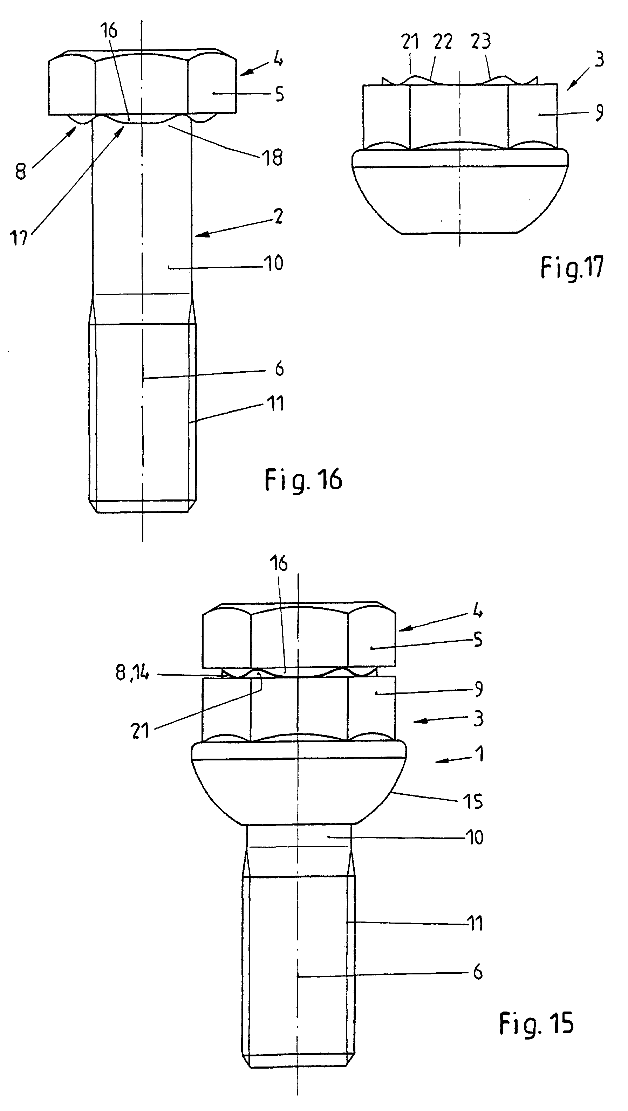

Das in den Fig. 15 bis 17 dargestellte Ausführungsbeispiel zeigt ein Verbindungselement 1, welches ebenfalls wiederum aus einem Schraubteil 2 und einem Sicherungsring 3 zusammengesetzt ist. Die Darstellung entspricht damit im wesentlichen der Darstellung der Fig. 1 bis 3, so daß auf die diesbezügliche Beschreibung Bezug genommen werden kann. Unterschiedlich ist die Ausbildung der Keilflächenverzahnungen 8 und 14. So sind unter dem Kopf 4 des Schraubteils 2 im Querschnitt bogenförmig verlaufende Formflächen 17, 18 vorgesehen, bei denen also sich der Tangentenwinkel über den Verdrehwinkel des Schraubteils 2 örtlich ändert. Mit zunehmendem Verdrehwinkel nimmt hierbei der Tangentenwinkel ab, d. h. die Neigung der Formfläche 17 wird mit steigendem Verdrehwinkel kleiner. Entsprechend sind am Sicherungsring 3 die Formflächen 22 und 23 ausgebildet und angeordnet, die miteinander jeweils einen Zahn 21 bilden. Bei dieser Ausführungsform besteht flächige Anlage der Keilflächenverzahnungen 8 und 14 nur in einer der sechs bevorzugten Winkelstellungen zwischen Schraubteil 2 und Sicherungsring 3. Jede Relativverdrehung führt zu einer punkt- oder linienförmigen Abstützung.

### BEZUGSZEICHENLISTE

- 1 -: Verbindungselement
- 2 -: Schraubteil
- 3 -: Sicherungsring
- 4 -: Kopf
- 5 -: Schlüsselangriffsfläche
- 6 -: Achse
- 7 -: Abstützfläche
- 8 -: Keilflächenverzahnung
- 9 -: Schlüsselangriffsfläche
- 10 -: Schaft

- 11 -: Gewindeabschnitt
- 12 -: Bohrung
- 13 -: Gegenabstützfläche
- 14 -: Keilflächenverzahnung
- 15 -: Anlagefläche
- 16 -: Zahn
- 17 -: Formfläche
- 18 -: Formfläche
- 19 -: Tangentenwinkel
- 20 -: Tangentenwinkel

- 21 -: Zahn
- 22 -: Formfläche
- 23 -: Formfläche
- 24 -: Drehrichtung
- 25 -: Drehrichtung
- 26 -: Rille
- 27 -: Materialwulst
- 28 -: Rippe
- 29 -: Klebepunkt

## Patentansprüche

1. Lösbares Verbindungselement (1) für ein Bauteil, mit einem Schraubteil (2), insbesondere einer Radschraube, und einem Sicherungsring (3), der an dem Schraubteil (2) drehbar angeordnet ist, wobei das Schraubteil (2) eine erste Schlüsselangriffsfläche (5), einen Gewindeabschnitt (11) und eine Abstützfläche (7) zur Übertragung einer Axialkraft auf den Sicherungsring (3) aufweist, der Sicherungsring (3) eine zweite Schlüsselangriffsfläche (9), eine Gegenabstützfläche (13) und eine Anlagefläche (15) für die Übertragung der Axialkraft auf das Bauteil besitzt und an der Abstützfläche (7) und der Gegenabstützfläche (9) zwischen Schraubteil (2) und Sicherungsring (3) korrespondierende Keilflächenverzahnungen (8, 14) mit in einer Drehrichtung (25) unter Erhöhung der Axialkraft aufgleitenden, geneigt angeordneten Formflächen (18, 23) vorgesehen sind, **dadurch gekennzeichnet, dass** die Keilflächenverzahnungen (8, 14) auch in der anderen Drehrichtung (24) unter Erhöhung der Axialkraft aufgleitende, geneigt angeordnete Formflächen (17, 22) aufweisen, sodass bei im Betrieb auftretender Krafteinwirkung auf das Schraubteil (2) und/oder den Sicherungsring (3) zwischen Schraubteil (2) und Sicherungsring (3) eine dem selbsttätigen Lösen entgegengerichtete Sicherungswirkung entsteht.

2. Verbindungselement nach Anspruch 1, **dadurch gekennzeichnet, dass** die beiden Keilflächenverzahnungen (8, 14) so ausgebildet und angeordnet sind, dass sie beim gemeinsamen manuellen Anziehen und beim gemeinsamen manuellen Losdrehen des Schraubteils (2) und des Sicherungsrings (3) Formschluß behalten.

3. Verbindungselement nach Anspruch 1 oder 2, **dadurch gekennzeichnet, dass** sich die zur Umfangsrichtung geneigt angeordnete Formflächen (17 und 18, 22 und 23) der Keilflächenverzahnungen (8, 14) zu je einem Zahn (16, 21) ergänzen, wobei zur Ermöglichung der das Schraubteil (2) und den Sicherungsring (3) auseinanderdrehenden Gleitbewegung die in Lordrehrichtung mit-einander in Kontakt kommenden Formflächen (18, 23) mit einem vergleichsweise kleinen, d.h. das Aufgleiten in Losdrehrichtung ermöglichenden, mittleren Tangentenwinkel (20) relativ zur Umfangsrichtung angeordnet sind.

4. Verbindungselement nach Anspruch 3, **dadurch gekennzeichnet, dass** der wirksame Tangentenwinkel (20) der in Losdrehrichtung des Schraubteils miteinander in Kontakt kommenden Formflächen (18, 23) der Keilflächenverzahnungen (8, 14) nur geringfügig größer als der Steigungswinkel des Gewindeabschnitts (11) bemessen ist.

5. Verbindungselement nach Anspruch 4, **dadurch gekennzeichnet, dass** der wirksame Tangentenwinkel (20) der in Losdrehrichtung des Schraubteils (2) miteinander in Kontakt kommenden Formflächen (18, 23) der Keilflächenverzahnungen (8, 14) bis zu 20 % größer als der Steigungswinkel des Gewindes des Gewindeabschnitts (11) bemessen ist.

6. Verbindungselement nach einem der Ansprüche 1 bis 5, **dadurch gekennzeichnet, dass** die in den beiden Umfangsrichtungen geneigt angeordneten Formflächen (17 und 18, 22 und 23) symmetrisch ausgebildet und symmetrisch geneigt angeordnet sind.

7. Verbindungselement nach einem der Ansprüche 1 bis 5, **dadurch gekennzeichnet, dass** die in den beiden Umfangsrichtungen geneigt angeordneten Formflächen (17 und 18, 22 und 23) asymmetrisch ausgebildet und/oder asymmetrisch geneigt angeordnet sind.

8. Verbindungselement nach einem oder mehreren der Ansprüche 1 bis 7, **dadurch gekennzeichnet, dass** die zur Erreichung der Gleitbewegung in Losdrehrichtung miteinander in Kontakt kommenden Formflächen (18, 23) als nicht-ebene, gewindeartig verlaufende Formflächen ausgebildet sind.

9. Verbindungselement nach einem oder mehreren der Ansprüche 1 bis 8, **dadurch gekennzeichnet, dass** die beiden Keilflächenverzahnungen (8, 14) und/oder die Anlagefläche (15) des Sicherungsrings (3) für die Übertragung der Axialkraft auf das Bauteil so ausgebildet und angeordnet sind, dass das über die Keilflächenverzahnungen übertragbare Drehmoment kleiner als das zwischen Sicherungsring (3) und Bauteil übertragbare Drehmoment ist.

10. Verbindungselement nach Anspruch 9, **dadurch gekennzeichnet, dass** die Anlagefläche (15) des Sicherungsrings (3) mit Mitteln zur Erzeugung einer erhöhten Reibung versehen ist.

11. Verbindungselement nach Anspruch 10, **dadurch gekennzeichnet, dass** die Mittel zur Erzeugung einer erhöhten Reibung Rippen (28), leistenartige Vorsprünge, eine die Reibung erhöhende Beschichtung und/oder einer gestrahlten Oberfläche umfassen.

12. Verbindungselement nach einem oder mehreren der Ansprüche 1 bis 11, **dadurch gekennzeichnet, dass** die Anlagefläche (15) des Sicherungsrings (3) an dem Bauteil einen größeren Reibradius als die Keilflächenverzahnungen (8, 14) aufweist.

13. Verbindungselement nach einem oder mehreren der Ansprüche 1 bis 12, **dadurch gekennzeichnet, dass** der Sicherungsring (3) an dem Schraubteil (2) unverlierbar, aber beweglich, angeordnet ist.

14. Verbindungselement nach einem oder mehreren der Ansprüche 1 bis 13, **dadurch gekennzeichnet, dass** die erste Schlüsselangriffsfläche (5) an dem Schraubteil (2) und die zweite Schlüsselangriffsfläche (9) an dem Sicherungsring (3) zueinander fluchtend ausgebildet und angeordnet sind, sodass sie mit einem Schlüssel gemeinsam handhabbar sind.

15. Verbindungselement nach einem oder mehreren der Ansprüche 1 bis 14, **dadurch gekennzeichnet, dass** das Schraubteil (2) und der Sicherungsring (3) insbesondere durch einen Klebepunkt (29) miteinander winkelgetreu verbunden sind.

## Claims

1. A releasable fastener (1) for a component, comprising a screw member (2), especially a wheel bolt, and a securing ring (3), the securing ring (3) being rotatably connected to the screw member (2), the screw member (2) including a first wrench engagement surface (5), a threaded portion (11) and a support surface (7) being designed and arranged to transmit an axial force to the securing ring (3), the securing ring (3) including a second wrench engagement surface (9), a counterpart support surface (13) and a contact surface (15) being designed and arranged to transmit an axial force to the component, corresponding taper-surface tooth arrangements (8, 14) being provided on the support surface (7) of the screw member (2) and the counterpart support surface (13) of the securing ring (3) including inclined form surfaces (18, 23) being designed and arranged to increase axial force when rotated in one direction (25) of rotation, **characterized in that** the taper-surface tooth arrangements (8, 14) include inclined form surfaces (17, 22) being designed and arranged such to increase axial force when rotated in the other direction (24) of rotation also so that in use when forces act on the screw member (2) and/or on the securing ring (3) there is a securing action between the screw member (2) and the securing ring (3), the securing action acting against a self-releasing effect of the fastener.

2. Fastener of claim 1, **characterized in that** the two taper-surface tooth arrangements (8, 14) are designed and arranged such that the tooth arrangements maintain their positively locking engagement upon common manual tightening and common manual unscrewing of the screw member (2) and the securing ring (3).

3. Fastener of claim 1 or 2, **characterized in that** the form surfaces (17 and 18, 22 and 23) of the taper-surface tooth arrangements (8, 14) each include a tooth (16, 21), wherein the form surfaces (18, 23), which come into contact with each other in the unscrewing direction being designed and arranged with a comparatively small mean tangential angle (20) with respect to the circumferential direction to permit a sliding movement which rotates the screw member (2) and the securing ring (3) away from each other.

4. Fastener of claim 3, **characterized in that** the effective tangential angle (20) of the form surfaces (18, 23) of the taper-surface tooth arrangements (8, 14) which come into contact with each other in the unscrewing direction is only slightly greater than the helix angle of the threaded portion (11).

5. Fastener of claim 4, **characterized in that** the effective tangential angle (20) of the form surfaces (18, 23) of the taper-surface tooth arrangements (8, 14) which come into contact with each other in the unscrewing direction is up to approximately 20 % greater than the helix angle of the threaded portion (11).

6. Fastener of one of the claims 1 to 5, **characterized in that** the form surfaces (17 and 18, 22 and 23) being arranged in an inclined manner with respect to both circumferential directions are designed and arranged to be symmetric.

7. Fastener of one of the claims 1 to 5, **characterized in that** the form surfaces (17 and 18, 22 and 23) being arranged in an inclined manner with respect to both circumferential directions are designed and/or arranged to be asymmetric.

8. Fastener of one or more of the claims 1 to 7, **characterized in that** the form surfaces (18, 23) which come into contact with each other to achieve the sliding movement in the unscrewing direction are designed as non-flat surfaces extending in a threaded configuration.

9. Fastener of one or more of the claims 1 to 8, **characterized in that** both of the taper-surface tooth arrangements (8, 14) and/or the contact surface (15) of the securing ring (3) to transmit axial force to the component are designed and arranged such that the transmission torque which can be transmitted by the first and second taper-surface tooth arrangements is less than the torque which can be transmitted between the securing ring (3) and the component.

10. Fastener of claim 9, **characterized in that** the contact surface (15) of the securing ring (3) has an increased level of friction.

11. Fastener of claim 10, **characterized in that** the contact surface includes at least one element taken from the group consisting of a plurality of ribs (28), bar-like projections, a friction-enhancing coating and/or a sand-blasted surface.

12. Fastener of one or more of the claims 1 to 11, **characterized in that** the contact surface (15) of the securing ring (3) to the component has a larger frictional radius than the taper-surface tooth arrangements (8, 14).

13. Fastener of one or more of the claims 1 to 12, **characterized in that** the securing ring (3) is arranged on the screw member (2) to be captive but movable.

14. The fastener of one or more of the claims 1 to 13, **characterized in that** the first wrench engagement surface (5) of the screw member (2) and the second wrench engagement surface (9) of the securing ring (3) are designed and arranged to be in mutually aligned relationship to be commonly operable with one wrench.

15. The fastener of one or more of the claims 1 to 14, **characterized in that** the screw member (2) and the securing ring (3) are interconnected in a common angle by a spot (29) of adhesive.

## Revendications

1. Elément de liaison (1) séparable pour un élément de construction, comportant une partie filetée (2), en particulier une vis pour roue, ainsi qu'un jonc d'arrêt (3) qui est disposé tournant sur la partie filetée (2), la partie filetée (2) présentant une première surface de prise de clé (5), un tronçon fileté (11) et une surface d'appui (7) pour la transmission d'une force axiale au jonc d'arrêt (3), le jonc d'arrêt (3) présentant une deuxième surface de prise de clé (9), une contre-surface d'appui (13) et une surface de contact (15) pour la transmission de la force axiale à l'élément de construction, et sur la surface d'appui (7) et la contre-surface d'appui (9) étant prévues, entre la partie filetée (2) et le jonc d'arrêt (3), des dentures à surfaces en coin (8, 14) correspondantes avec des surfaces profilées (18, 23) disposées inclinées glissant dans un sens de rotation (25) en augmentant la force axiale, **caractérisé en ce que** les dentures à surfaces en coin (8, 14) présentent aussi des surfaces profilées (17, 22) disposées inclinées, glissant dans l'autre sens de rotation (24) en augmentant la force axiale, ce qui fait que sous l'effet de la force se produisant pendant le fonctionnement sur la partie filetée (2) et/ou le jonc d'arrêt (3), il se produit un effet de blocage dirigé en sens contraire au desserrage automatique, entre la partie filetée (2) et le jonc d'arrêt (3).

2. Elément de liaison selon la revendication 1, **caractérisé en ce que** les deux dentures à surfaces en coin (8, 14) sont réalisées et disposées de manière à conserver leur liaison par complémentarité de formes lorsqu'on serre manuellement ensemble et desserre manuellement ensemble la partie filetée (2) et le jonc d'arrêt (3).

3. Elément de liaison selon la revendication 1 ou 2, **caractérisé en ce que** les surfaces profilées (17) et (18), (22) et (23) disposées inclinées par rapport à la direction périphérique des dentures à surfaces en coin (8, 14) se complètent en une dent (16, 21), et pour permettre le mouvement de glissement séparant la partie filetée (2) et le jonc d'arrêt (3), les surfaces profilées (18, 23) venant en contact l'une avec l'autre dans le sens de desserrage sont disposées suivant un angle tangentiel (20) médian par rapport à la direction périphérique, relativement petit, c'est-à-dire permettant le glissement dans le sens de desserrage.

4. Elément de liaison selon la revendication 3, **caractérisé en ce que** l'angle tangentiel (20) utile des surfaces profilées (18, 23) venant en contact l'une avec l'autre dans le sens de desserrage de la partie filetée, des dentures à surfaces en coin (8, 14), n'est dimensionné que légèrement supérieur à l'angle du pas du tronçon fileté (11).

5. Elément de liaison selon la revendication 4, **caractérisé en ce que** l'angle tangentiel (20) utile des surfaces profilées (18, 23) venant en contact l'une avec l'autre dans le sens de desserrage de la partie filetée (2), des dentures à surfaces en coin (8, 14), est dimensionné jusqu'à 20% supérieur à l'angle du pas du filetage du tronçon fileté (11).

6. Elément de liaison selon l'une des revendications 1 à 5, **caractérisé en ce que** les surfaces profilées (17 et 18), (22 et 23), disposées inclinées dans les deux directions périphériques, sont réalisées symétriques et disposées inclinées symétriquement.

7. Elément de liaison selon l'une des revendications 1 à 5, **caractérisé en ce que** les surfaces profilées (17 et 18), (22 et 23) disposées inclinées dans les deux directions périphériques, sont réalisées asymétriques et/ou disposées inclinées de manière asymétrique.

8. Elément de liaison selon une ou plusieurs des revendications 1 à 7, **caractérisé en ce que** les surfaces profilées (18, 23) venant en contact l'une avec l'autre dans le sens de desserrage par rotation, pour atteindre le mouvement de glissement, sont réalisées comme surfaces profilées non planes, s'étendant à la manière d'un filetage.

9. Elément de liaison selon une ou plusieurs des revendications 1 à 8, **caractérisé en ce que** les dentures à surfaces en coin (8, 14) et/ou la surface de contact (15) du jonc d'arrêt (3) sont réalisées et disposées, pour la transmission de la force axiale à l'élément de construction, de manière que le couple de rotation, pouvant être transmis par les dentures à surfaces en coin, soit inférieur au couple de rotation qui peut être transmis entre le jonc d'arrêt (3) et l'élément de construction.

10. Elément de liaison selon la revendication 9, **caractérisé en ce que** la surface de contact (15) du jonc d'arrêt (3) est pourvue de moyens destinés à produire une plus grande friction.

11. Elément de liaison selon la revendication 10, **caractérisé en ce que** les moyens destinés à produire une plus grande friction comprennent des nervures (28), des saillies de type baguettes, un revêtement accroissant la friction et/ou une surface sablée.

12. Elément de liaison selon une ou plusieurs des revendications 1 à 11, **caractérisé en ce que** la surface de contact (15) du jonc d'arrêt (3) présente sur l'élément de construction un plus grand rayon de friction que les dentures à surfaces en coin (8, 14).

13. Elément de liaison selon une ou plusieurs des revendications 1 à 12, **caractérisé en ce que** le jonc d'arrêt (3) est disposé imperdable sur la partie fixée (2), mais mobile.

14. Elément de liaison selon une ou plusieurs des revendications 1 à 13, **caractérisé en ce que** la première surface de prise de clé (5) sur la partie filetée (2) et la deuxième surface de prise de clé (9) sur le jonc d'arrêt (3) sont réalisées et disposées alignées l'une avec l'autre, de sorte qu'elles peuvent être manipulées ensemble avec une clé.

15. Elément de liaison selon une ou plusieurs des revendications 1 à 14, **caractérisé en ce que** la partie filetée (2) et le jonc d'arrêt (3) sont reliés entre eux en conservant un angle, en particulier par un point de collage (29).
